# EUROPÄISCHE PATENTSCHRIFT

(11) **EP 1 254 759 B1**
(45) Veröffentlichungstag und Bekanntmachung des Hinweises auf die Patenterteilung: **18.03.2009**
(21) Anmeldenummer: 02009431.4
(22) Anmeldetag: 25.04.2002
(51) Int. Cl.: B29C 65/10

(54) **Düse zum Schweissen von Kunststoffbahnen oder -folien**
Nozzle for welding plastic webs or films
Buse pour souder des bandes ou films en matière plastique

(30) Priorität: 03.05.2001 EP 01110751
(43) Veröffentlichungstag der Anmeldung: 06.11.2002
(73) Patentinhaber: Leister Process Technologies, 6056 Kägiswil (CH)
(72) Erfinder: Zurmühle, Walter, 6056 Kägiswill (CH); von Wyl, Bruno, 6056 Kägiswil (CH)
(74) Vertreter: Klocke, Peter

(56) Entgegenhaltungen:
- EP-A- 0 300 209
- EP-A- 0 863 359
- EP-A- 0 914 935
- DE-A1- 3 115 662
- PATENT ABSTRACTS OF JAPAN Bd. 017, Nr. 136 (M-1384), 19. März 1993 (1993-03-19) -& JP 04 314526 A (SEKISUI PLASTICS CO LTD), 5. November 1992 (1992-11-05)

## Beschreibung

Die vorliegende Erfindung betrifft eine Düse zum Schweißen von Kunststoffbahnen oder -folien mittels eines Heizluftschweißgeräts mit einer Oberseite und einer Unterseite zur Kontaktierung der oberen bzw. unteren miteinander zu verschweißenden Kunststoffbahn oder -folie mittels Heißluft, sowie aus der Oberfläche der Ober- und Unterseite hervorstehende Schleifeinrichtungen und mit Luftöffnungen in mindestens einer Oberfläche.

Derartige Düsen sind allgemein bekannt und werden entweder als Düse für ein Heißluft-Schweißgerät oder als ein Heizelement mit einer elektrischen Beheizung für sogenannte Heilkeilschweißgeräte sowie als Heizelementkombinationen daraus ausgebildet. Bei den Heißluft-Schweißgeräten wird Luft erhitzt und mittels einer besonders ausgestalteten Schweißdüse das zu verschweißende Material und -je nach Ausbildung- auch die Düse erhitzt. Die Lufterzeugung kann in dem Gehäuse des Schweißgerätes oder auch extern erfolgen. Bei letzterem wird die Luft mittels eines Schlauches der in dem Schweißgerät angeordneten Heizeinrichtung zugeführt. Bei den Heizkeilgeräten erfolgt die Erwärmung eines Heizkeils zum Verschweißen des Materials elektrisch.

Bei dem Verschweißen von Kunststoffbahnen und -folien werden die erhitzten Heizelemente zwischen den beiden zu verschweißenden Folien bewegt, wobei das Material entweder nur durch das Heizelement oder im Falle von Düsen zusätzlich durch die aus der Düse austretende heiße Luft erwärmt wird. In dem überlappenden Bereich des Materials, in dem das Heizelement geführt wird, soll das obere Material als auch das untere Material an der Oberfläche plastifiziert werden. Mittels einer nachfolgenden Anpresswalze oder -rollen werden dann die beiden Materialen miteinander verbunden bzw. verschweißt.

Schweißautomaten zum thermischen Verbinden von Kunststoffplanen, bei denen mittels Heißluft aus einer Düse die miteinander zu verschweißenden Bahnen an den überlappenden Rändern erwärmt und anschließend während dem Abkühlen zum Verbinden zusammen gepresst werden, sind in einer Vielzahl von Ausführungsformen bekannt. So beschreibt beispielsweise die Offenlegungsschrift EP 0 300 209 A2 eine Randschweißmaschine für thermoplastische Materialien, die ein Fahrgestell aufweist, das von zwei feststehenden und einer lenkbaren Laufrolle getragen ist. Das Fahrgestell ist mit einem Motor als Antriebseinheit ausgestattet und trägt eine Heißluft-Schweißeinrichtung mit einem elektrischen Heizelement und einem elektrischen Gebläse. Das Plastifizieren der Ränder der Bahnen erfolgt durch die von dem Heizgebläse erzeugte Heißluft. Dazu werden diese über ein abgekröpftes Fußstück und einer an dessen Austrittsseite vorgesehenen Düse, die zwischen die zu verbindenden Ränder der Bahnen seitlich einführbar ist, an den einander zugeordneten Kontaktflächen mit der Heißluft beaufschlagt und mittels einer nachfolgenden Anpressrollen miteinander verbunden.

Es hat sich gezeigt, dass eine bessere Verschweißung erreicht werden kann, wenn die Kunststoffdichtungsbahnen und -folien, im Nachfolgenden als Materialien bezeichnet, vor dem Verschweißen aufgeraut werden. Dies kann beispielsweise mit einer metallischen Bürste als Schleifeinrichtung geschehen, wie es in der Offenlegungsschrift JP 04-314526 vorgeschlagen wird. Dort wird ein Verfahren zum flächigen Verbinden von geschäumten Bahnen vorgestellt, bei denen die thermisch miteinander zu verbindenden Oberflächen der Bahnen vor dem Laminieren mit der Schleifeinrichtung fein aufgerauht werden. Des weiteren ist aus der EP-A-914 935 eine Düse bekannt, die auf der Oberseite eine Schleifeinrichtung aufweist, die zumindest auf der Unterseite der oberen Folie eine Aufrauung des zu verschweißenden Materials bewirkt.

Insbesondere bei dem Einsatz derartiger Heizelemente bei Handgeräten zum Verschweißen von Kunststoffdichtungsbahnen und -folien ist es erforderlich in Verbindung mit einer entsprechenden Antriebseinrichtung für eine ausreichende Aufrauung zu sorgen, damit ein kontinuierliches Schweißen möglich ist.

Bei der Bewegung einer Düse mit Schleifeinrichtungen auf der Ober- und Unterseite entsteht das Problem, dass die Oberseite des unteren Materials durch das Gewicht der Schweißmaschine bzw. den Anpressdruck durch den Bediener eine ausreichende Aufrauung bewirkt. Eine entsprechende, auf die Unterseite des oberen Materials wirkende Kraft fehlt jedoch, so dass in diesem Bereich die Aufrauung in der Regel nicht ausreichend ist.

Der vorliegenden Erfindung liegt daher die Aufgabe zugrunde, eine Düse vorzuschlagen, das sowohl bei Kunststoffschweißmaschinen als auch bei Handgeräten zum Verschweißen von Kunststoffdichtungsbahnen und -folien mittels Heißluft einsetzbar ist und immer ein sicheres Aufrauen sowohl der unteren als auch der oberen Folie zum Zwecke der einwandfreien Verbindung der Materialen in dem Überlappungsbereich gewährleistet.

Diese Aufgabe wird erfindungsgemäß durch eine Düse mit den Merkmalen des Anspruchs 1 gelöst. Weitere vorteilhafte Ausgestaltungen sind den Unteransprüchen zu entnehmen.

Gemäß der Erfindung weist die Düse für ein Heißluft-Schweißgerät Luftöffnungen in mindestens einer Oberfläche mit in Schweißrichtung vor den Luftöffnungen quer zur Schweißrichtung angeordnete Erhebungen am Rand der Luftöffnungen auf. Auf dem Weg an den Lüftöffnungen vorbei erwärmt sich das Material immer mehr, so dass die Aufrauung und das Einkratzen der Erhebungen unterschiedlich auswirkt. Überraschenderweise hat sich herausgestellt, dass die von der austretenden Heißluft zusätzlich erhitzten Erhebungen das Folienmaterial hervorragend aufrauen, wobei das von der Oberfläche der Folie abgekratzte Material an den Erhebungen gehalten und über die Zeit verflüchtigt wird, so dass die Düse sich nicht mit Materialen zusetzt. Außerdem vermeidet eine derartige Düse bei der Überlappung der zu verschweißenden Materialien keinen seitlichen Materialauswurf der Schmelze, so dass die Schweißnaht erheblich besser wird. Auch dünne, weiche Materialen, wie z.B. PVC, können damit bestens verschweißt werden. Dies geht insbesondere dann gut, wenn die Erhebung an der Oberkante eine Spitze aufweist.

Eine derartige Düse kann gemäß einer weiteren Ausbildung kostengünstig hergestellt werden, wenn die am Rand angeordneten Erhebungen direkt bei der Erstellung der Luftöffnungen und aus dem in diesem Bereich angeordneten Material durch Ausstanzen hergestellt werden.

Gemäß einer weiteren Ausgestaltung der Erfindung ist zwischen der Oberseite und der Unterseite zusätzlich eine elektrische Heizung angeordnet, wobei vorteilhafterweise die elektrische Heizung als Heizpatrone ausgebildet ist. Damit kann bei bestimmten Anwendungsfällen bei einem Nachlassen der Erwärmung des Materials durch die Heißluft auf elektrischem Wege nachgeholfen werden.

Gemäß einer weiteren Ausbildung der Erfindung ist die Düse keilförmig ausgebildet, wobei vorzugsweise die Oberseite über die Schweißlänge der Düse zumindest einen absteigenden Bereich aufweist über den das Material, die Oberfläche kontaktierend, bewegt wird. Als Schweißlänge wird im Nachfolgenden der Bereich bezeichnet, in dem eine Erwärmung der Materialien bewirkt wird. Durch den mindestens einen ansteigenden (als Folge der Keilform) und einen absteigenden Bereich wird das obere Material insbesondere in Verbindung einer nachlaufenden Rolle ein größeres Stück von dem unteren Material entfernt und infolge dessen gespannt und eine Streckspannung erzeugt, so dass das Material über die Oberfläche der Oberseite zwangsgeführt wird. Damit wird eine verstärkte Aufrauung des oberen Materials auf der Unterseite bewirkt. Die Aufrauung auf der Oberseite des unteren Materials wird durch den Anpressdruck der Maschine bzw. des Bedieners erreicht und ist nicht kritisch. Insbesondere bei unebenem Untergrund ist es vorteilhaft, auch der Unterseite eine Keilform zu geben.

Die Oberseite der Düse kann dabei über die Schweißlänge dreieckförmig, trapezförmig oder bogenförmig ausgebildet sein. Bei der Trapezform weist die Oberseite einen ansteigenden, einen absteigenden und einen dazwischenliegenden im wesentlichen zu der Unterseite parallel verlaufenden Bereich auf, so dass die Verweilzeit verlängert wird. Alle diese bevorzugten Ausführungsformen bewirken die gewünschte Streckspannung des oberen Materials mit einem an der Oberseite der Düse anliegenden Material. Vor dem endgültigen Zusammenfügen der Materialien wird sowohl das obere Material als auch das untere Material auf dem Weg über die Düse von einem anfangs harten Zustand in den plastifizierten Zustand übergeführt. Dadurch erfolgt im wesentlichen in dem ansteigenden Bereich auf der Oberseite der Düse zuerst einmal ein Kratzen der Oberfläche des noch kalten Materials. Dies ist besonders vorteilhaft bei Materialien, die längere Zeit im Freien gelegen haben und bei denen sich auf der Oberseite bereits durch die Witterung eine Schmutzschicht gebildet hat. Je weiter sich das Material über die Düse bewegt und dabei mit entsprechendem Druck sich über die Oberfläche bewegt, erfolgt dann im weiteren Verlauf durch das langsame Weichwerden ein tiefergehendes Aufrauen bis hin zu einem verstärkten Aufrauen im plastifizierten Zustand kurz vor dem Zusammenfügen mittels einer Rolle.

Vorteilhafterweise befindet sich oberhalb der Oberseite ein der Kontur der Oberseite entsprechendes Führungselement, das zusätzlich dafür sorgt, dass das Material eng über die Oberseite der Düse gleitet.

Nachfolgend wird die Erfindung anhand eines Ausführungsbeispiels näher erläutert. Es stellen dar:
- Figur 1: Die schematische perspektivische Darstellung einer Antriebseinrichtung mit einem handgeführten Heizgerät;
- Figur 2: die vergrößerte perspektivische Ansicht einer Schweißdüse von oben;
- Figur 3: die perspektivische vergrößerte Darstellung der Schweißdüse gemäß Figur 2 von unten; und
- Figur 4: die vergrößerte Stirnansicht der Schweißdüse mit Andrückrolle, wobei in dieser Schweißdüse noch zusätzlich eine elektrische Heizung in Form einer Heizpatrone schematisch angedeutet ist.

Im Nachfolgenden wird die Erfindung an einer Heißluftdüse 4 für ein Heißluft-Schweißgerät 1, das in dem Gehäuse 2 ein Gebläse aufweist, erläutert. Anstatt Luft kann auch ein Gas, z.B. Stickstoff verwendet werden. Auch kann die Heißluftdüse 4 bei einem Handschweißgerät eingesetzt werden, wobei das Zusammendrücken der verschweißten Materialen mittels einer Handrolle durchgeführt wird.

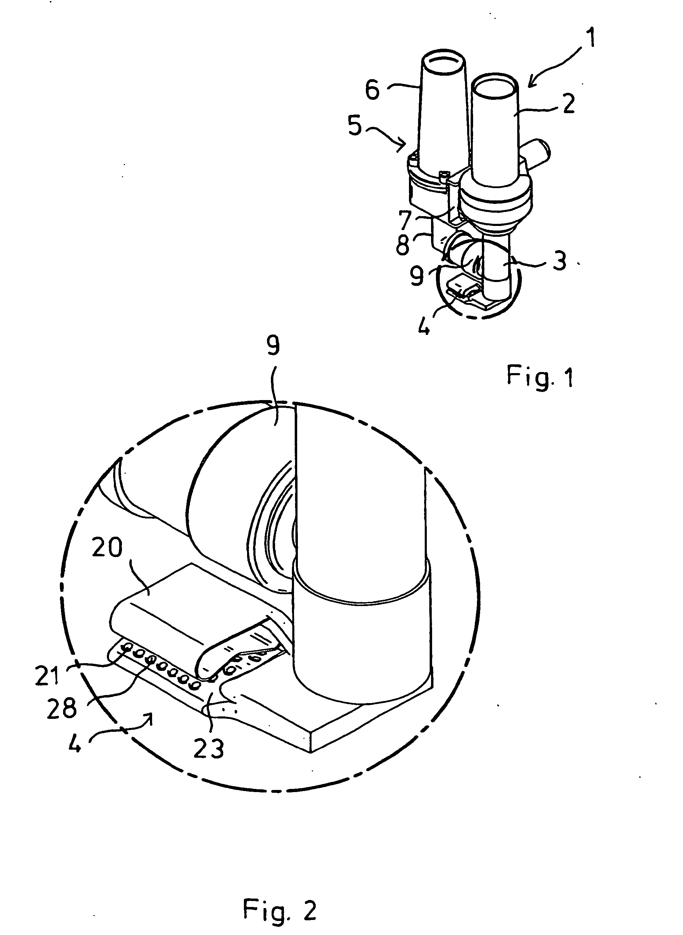

Figur 1 zeigt in schematischer Darstellung ein Heißluft-Schweißgerät 1 mit dem Gehäuse 2, in dem ein Gebläse angeordnet, das durch das Heizrohr 3 Luft in die Düse 4 bläst. Des weiteren ist in der Figur 1 eine Antriebseinrichtung 5 mit einem ebenfalls länglichen Gehäuse 6 dargestellt, die über eine Kupplungseinheit 7 mit dem Heißluft-Schweißgerät 1 verbunden ist. Am unteren Ende 8 ist das Gehäuse 6 als gewinkelt und trägt am freien Ende eine Andrück- und Antriebsrolle 9. In dem Gehäuse 6 und dem abgewinkelten unteren Gehäuseende 8 befindet sich ein nicht dargestellter handelsüblicher Motor bzw. ein entsprechendes handelsübliches Winkelgetriebe.

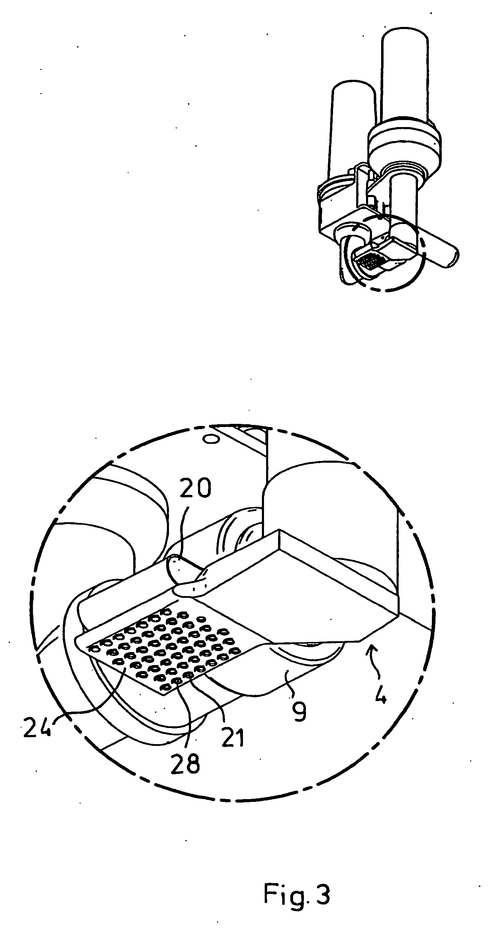

In den Figuren 2 bis 4 ist die Düse 4 in verschiedenen Ansichten zur Verdeutlichung dargestellt. Die Düse 4 ist, wie aus den Figuren ersichtlich, dreieckförmig ausgebildet, wobei das Führungsblech 20 auf seiner Unterseite der zeltdachförmigen Ausbildung der Düse 4 entspricht. Sowohl auf der Oberseite 23 als auch auf der Unterseite 24 weist die Düse 4 Erhebungen 21, vorzugsweise scharfkantige Erhebungen, zum Aufrauen der Materialien auf. Durch die Erhebungen 21 auf der Oberseite 23 wird das obere Material und durch die Erhebungen 21 auf der Unterseite 24 das untere Material in der Überlappung aufgeraut. Die Erhebungen 21 sind in dem Ausführungsbeispiel rund ausgebildet und können direkt durch einen Stanzvorgang hergestellt. Die Erhebungen 21 sind in den Figuren mit einer relativ geraden Oberkante dargestellt, können jedoch auch, wie vorstehend bereits erwähnt, eine oder mehrere Spitzen aufweisen. Eine mittige Spitze, die zum Rand der Erhebung 21 abfällt, hat sich hierbei sehr gut bewährt. Die durch die Düse strömende heiße Luft tritt an der Öffnung 22 der Düse aus, um das Material zu erwärmen. Von der Luft wird die gesamte Düse ebenfalls erhitzt. Außerdem tritt die Luft auch durch die Luftöffnungen 28 aus und erwärmt die Erhebungen 21 sowie das zu verschweißende Material.

Bei der ersten Kontaktierung der Materialien mit der Düse erfolgt eine mechanische Aufrauung der noch kalten Folie an der Schräge 25. Im weiteren Verlauf wird die Folie durch die Berührung der heißen Oberseite 23 der Düse 4 erwärmt, so dass das Material entspannt und flexibler wird. Damit wird im weiteren Verlauf auf der Schräge 26 eine stärkere Aufrauung durch das Eindringen der Erhebungen 21 in das nun weichere Material erreicht und im Anschluss daran eine optimale Verschweißung bewirkt. Die der Düse 4 nachlaufende Andrück- und Antriebsrolle 9 sorgt für den notwendigen Druck, insbesondere auf das über die Fläche der Schräge 26 der Düse 4 geführte Materials, so dass in dieser Phase die gewünschte Aufrauung vor der Verschweißung erreicht wird. Eine entsprechende Materialvorbereitung kann auch mittels einer trapezförmigen, nicht dargestellten Düse erreicht werden, bei der zwischen den beiden schrägen Flächen 25 und 26 gemäß der Figuren 2 bis 4 auf der Oberseite 23 eine gerade Fläche ohne Erhebungen angeordnet ist, um die Phase der Materialentspannung und Erwärmung zu verlängern. Auf dieser Fläche hat die Düse eine Heizkeilwirkung und bewirkt eine Plastifizierung des Materials. Dadurch wird auf der nachfolgenden Schräge 26 ein tieferes Eindringen der Erhebungen 23 erreicht. Dies ergibt gegenüber den bekannten Düsen, die auf der Oberseite nur eine im Wesentlichen waagerecht angeordnete Fläche mit Aufraueinrichtungen aufweisen, eine Qualitätsverbesserung hinsichtlich der Schweißbarkeit (erhöhtes Schweißfenster) und Schweißnahtfestigkeit.

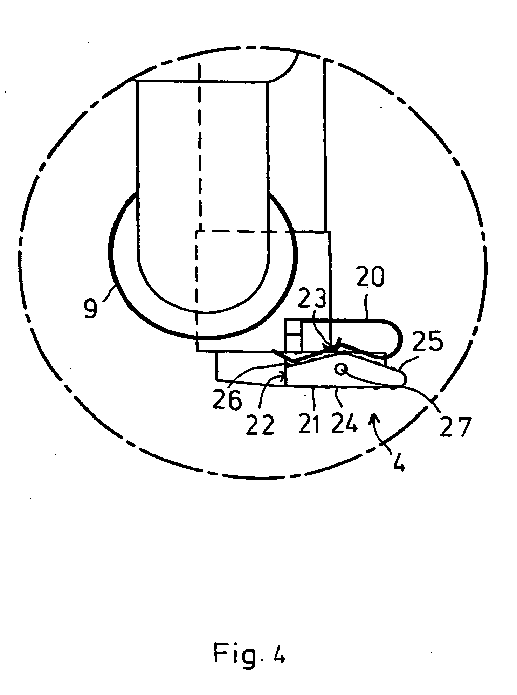

Figur 4 zeigt schematisch angedeutet eine Heizpatrone 27, so dass in diesem Ausführungsbeispiel die Kombination eines Heizkeiles mit einer Heißluftdüse beispielhaft realisiert ist.

## Patentansprüche

1. Düse (4) zum Schweißen von Kunststoffbahnen oder -folien mittels eines Heißluft-Schweißgeräts (5) mit einer Oberseite (23) und einer Unterseite (24) zur Kontaktierung der oberen bzw. unteren miteinander zu verschweißenden Kunststoffbahn oder -folie, sowie aus der Oberfläche der Ober- und Unterseite hervorstehende Schleifeinrichtungen (21) und mit Luftöffnungen (28) in mindestens einer Oberfläche, **dadurch gekennzeichnet, dass** aus den Oberflächen hervorstehende quer zur Schweißrichtung angeordnete Erhebungen (21) am Rand der Luftöffnungen (28) und in Schweißrichtung vor den Luftöffnungen (28) angeordnet sind.

2. Düse nach Anspruch 1, **dadurch gekennzeichnet, dass** die Erhebungen, dem Rand der Luftöffnungen (28) angepasst, gebogen sind.

3. Düse nach Anspruch 1 oder 2, **dadurch gekennzeichnet, dass** die Ober - und / oder die Unterseite keilförmig ausgebildet sind.

4. Düse nach Anspruch 3, **dadurch gekennzeichnet, dass** Oberseite mindestens einen absteigende Bereich (26) aufweist, über den die Folie bewegt wird.

5. Düse nach einem der vorangegangenen Ansprüche, **dadurch gekennzeichnet, dass** zwischen der Oberseite (23) und der Unterseite (24) zusätzlich eine elektrische Heizung (27) angeordnet ist.

6. Düse nach Anspruch 5, **dadurch gekennzeichnet, dass** die elektrische Heizung als Heizpatrone ausgebildet ist.

7. Düse nach einem der vorangegangenen Ansprüche, **dadurch gekennzeichnet, dass** oberhalb der Oberseite eine der Kontur der Oberseite entsprechendes Führungselement (20) angeordnet ist.

## Claims

1. Nozzle (4) for welding plastic material webs or foils by means of a hot-air welding device (5) with a top side (23) and a bottom side (24) for contacting the top or respectively bottom plastic material web or foil to be welded together, and grinding devices (21) that protrude from the surface of the top side and the bottom side and with air openings (28) in at least one surface, **characterised in that** elevations (21), which extend from the surfaces and are positioned transversely relative to the welding direction, are positioned at the edge of the air openings (28) and in the welding direction in front of the air openings (28).

2. Nozzle according to claim 1, **characterised in that** the elevations, adapted to the edge of the air openings (28), are curved.

3. Nozzle according to claim 1 or 2, **characterised in that** the top side and/or the bottom side are wedge-shaped.

4. Nozzle according to claim 3, **characterised in that** the top side has at least one descending region (26), over which the foil is moved.

5. Nozzle according to one of the preceding claims, **characterised in that** an electric heating means (27) is also positioned between the top side (23) and the bottom side (24).

6. Nozzle according to claim 5, **characterised in that** the electric heating means is in the form of a heating cartridge.

7. Nozzle according to one of the preceding claims, **characterised in that** a guide element (20) that corresponds to the contour of the top side, is positioned above the top side.

## Revendications

1. Buse (4) pour souder des bandes ou films de matière plastique au moyen d'un appareil (5) de soudage à air chaud, avec un côté supérieur (23) et un côté inférieur (24) pour entrer en contact respectivement avec la bande ou le film supérieur et la bande ou le film inférieur de matière plastique à souder entre eux, ainsi qu'avec des organes frotteurs (21) dépassant de la surface du côté supérieur et du côté inférieur et avec des ouvertures d'air (28) dans au moins une surface, **caractérisée en ce que** des bossages (21), qui dépassent des surfaces et sont disposés transversalement à la direction de soudage, sont disposés sur le bord des ouvertures d'air (28) et avant les ouvertures d'air (28) dans la direction de soudage.

2. Buse selon la revendication 1, **caractérisée en ce que** les bossages sont incurvés d'une manière adaptée au bord des ouvertures d'air (28).

3. Buse selon la revendication 1 ou 2, **caractérisée en ce que** le côté supérieur et/ou le côté inférieur sont réalisés cunéiformes.

4. Buse selon la revendication 3, **caractérisée en ce que** le côté supérieur présente au moins une région descendante (26) sur laquelle le film est déplacé.

5. Buse selon l'une des revendications précédentes, **caractérisée en ce qu'**un chauffage électrique (27) est en outre disposé entre le côté supérieur (23) et le côté inférieur (24).

6. Buse selon la revendication 5, **caractérisée en ce que** le chauffage électrique est réalisé sous forme de cartouche chauffante.

7. Buse selon l'une des revendications précédentes, **caractérisée en ce qu'**un élément de guidage (20) correspondant au contour du côté supérieur est disposé au-dessus du côté supérieur.
